# DEMANDE DE BREVET EUROPEEN

(11) **EP 4 082 328 A1**
(43) Date de publication de la demande: **02.11.2022**
(21) Numéro de dépôt: 22170019.8
(22) Date de dépôt: 26.04.2022
(51) Int. Cl.: A01F 29/00, A01D 87/12

(54) **PROCÉDÉ DE PRÉHENSION ET D'EXTRACTION DU MOYEN DE LIAISON D'UNE BOTTE ET MACHINE DESTINÉE À CHARGER, DÉFAIRE, DISTRIBUER ET/OU TRANSFORMER UNE TELLE BOTTE ET MUNIE D'UN DISPOSITIF DE PRÉHENSION ET D'EXTRACTION**

(30) Priorité: 28.04.2021 FR 2104429
(71) Demandeur: Kuhn-Audureau SAS, 85260 La Copechagnière (FR)
(72) Inventeur: GAUTRON, Pascal, 85250 SAINT-FULGENT (FR); ROGER, Christophe, 85000 LA ROCHE-SUR-YON (FR)
(74) Mandataire: Esch, Esther Evelyne

(57) **Abrégé**

L'invention se réfère à un procédé de préhension et d'extraction d' un moyen de liaison d'une botte (B) et une machine destinée à défaire une telle botte maintenue en forme par un moyen de liaison (L) s'étendant au niveau de sa surface externe (S). La machine comprend un moyen de préhension (1) configuré pour saisir le moyen de liaison, des moyens d'extraction configurés pour pouvoir agir sur le moyen de liaison de sorte à pouvoir l'extraire de la botte en l'écartant de sa surface externe. Ledit moyen de préhension sont déplacer au-dessus de ladite surface de réception (P1) entre une première position lui permettant d'être éloigné de la surface externe et une deuxième position lui permettant, pour saisir le moyen de liaison, d'être positionné au niveau de la surface externe.

## Description

La présente invention concerne le domaine de l'élevage des animaux, ou de la fabrication de granulés utilisés notamment comme combustible, à partir de bottes cylindrique ou parallélépipédique de paille, de foin ou de produits similaires et plus particulièrement le domaine des machines destinées à charger, défaire, distribuer et/ou transformer de telles bottes. Elle a pour objet un procédé de préhension et d'extraction du moyen de liaison d'une botte cylindrique ou parallélépipédique chargée dans une machine destinée à charger, défaire, distribuer et/ou transformer une telle botte. Elle a également pour objet une telle machine.

Lorsque les animaux d'élevage n'ont pas accès aux pâturages, ils sont nourris à partir du stock ou de la réserve de fourrage issues des surfaces fourragères exploitées pour la fauche. L'herbe coupée est récoltée à l'issue de quelques jours de séchage au moyen d'une presse pour la conditionner sous la forme de bottes, également appelées balles, de forme cylindrique ou parallélépipédique.

Les bottes ainsi produites sont stockées et utilisées le moment venu, sous la forme de fourrage pour l'alimentation des animaux d'élevage. L'éleveur utilise également de la paille conditionnée en bottes pour réaliser la litière ou le couchage des animaux.

Les bottes sont entourées ou ceinturées par un moyen de liaison constitué d'un ou plusieurs lien(s) pour les maintenir dans leur forme, c'est-à-dire dans une forme compactée permettant leur manutention et leur stockage et/ou leur protection. Le moyen de liaison comprend un ou plusieurs liens, généralement du type ficelle, entourant la botte sur un ou plusieurs tours de sorte à serrer et lier ensemble le ou les produit(s) constituant la botte. D'autres liens, du type filet, film ou enveloppe de protection, sont également utilisés pour constituer un tel moyen de liaison. Du fait de la matière de la botte, le moyen de liaison, notamment du type ficelle ou filet, s'étend au niveau de la surface externe de la botte, c'est-à-dire sur ladite surface externe et/ou dans l'épaisseur (ou la matière) de la botte à proximité de ladite surface externe.

Le moyen de liaison s'étend sur toute ou partie de la surface externe de la botte. Dans le cas par exemple d'une botte cylindrique, le moyen de liaison s'étend généralement uniquement sur sa surface externe cylindrique entre ses deux extrémités circulaires ou flancs, c'est-à-dire sans s'étendre au niveau desdites extrémités circulaires.

Plusieurs types de machines sont utilisées pour traiter de telles bottes, que ce soit pour répandre la paille et former la litière, pour mélanger et/ou distribuer du fourrage ou, dans un autre domaine que celui des animaux d'élevage, pour transformer une telle botte de paille en la décompactant ou déstructurant pour en faire des granulés, aussi appelés pellets, généralement de forme cylindrique, utilisés notamment comme combustible pour le chauffage. De telles machines sont ainsi du type pailleuse ou du type pour la fabrication de granulés utilisés notamment comme combustible.

Une machine du type pailleuse dispose d'un caisson pour réceptionner la botte, un organe rotatif type démêleur, un moyen de déplacement de la botte en direction de l'organe rotatif et éventuellement d'une porte de chargement et de transfert de la botte. La botte est déposée dans le caisson, muni ou non de parois latérales, pour être déstructurée et répartie sur le sol sur un andain au niveau de la table d'alimentation ou pour être répartie largement sur la surface du sol grâce à une turbine qui expulse la paille à plusieurs mètres. Le moyen de déplacement est placé dans le caisson et est constitué, par exemple, par un tapis à chaines avec des barrettes. La porte est montée de manière articulée sur le caisson entre une position de chargement et une position de transfert de la botte dans le caisson. La porte de chargement permet de déplacer la botte cylindrique pour libérer le moyen de liaison et faciliter son extraction.

Un tel caisson est également présent sur une machine pour la fabrication de granulés utilisés notamment comme combustible. La machine du type plateforme, fixe ou stationnaire, permet de décompacter ou déstructurer une botte de paille pour en faire de tels granulés.

Toutefois, avant de procéder auxdits traitements d'une botte chargée dans le caisson, le moyen de liaison doit être retiré. Cette opération est généralement réalisée, dans un premier temps, lors d'une opération de sectionnement consistant à couper le moyen de liaison puis, dans un deuxième temps, en tirant sur celui-ci pour le retirer de la botte et le dégager.

Traditionnellement, ces opérations de coupe et de retrait sont réalisées manuellement. La coupe est réalisée à l'aide d'un couteau ou d'un cutter et le retrait est réalisé en saisissant manuellement le moyen de liaison. Le moyen de liaison doit être coupé sur toute la largeur de la botte puis il faut séparer et retirer le moyen de liaison coupé et par conséquent divisé en plusieurs liens. Le retrait des liens est effectué individuellement ou par réunion de plusieurs liens en fonction de la difficulté d'extraction par traction puisque le poids de plusieurs centaines de kilogrammes de la botte repose sur le moyen de liaison coupé. Ces opérations manuelles et quotidiennes sont fastidieuses pour l'opérateur. En outre, elles sont généralement effectuées une fois que la botte est placée dans la machine avec un accès au moyen de liaison limité notamment, le cas échéant, par la présence des parois latérales du caisson et nécessitant parfois une passerelle. Cette opération d'extraction est effectuée dans une position souvent inconfortable pour l'opérateur.

Pour remédier à une partie des inconvénients, le document FR3089385 propose un dispositif de coupe placé dans le fond de la machine pour couper/trancher les liens lorsque la botte est chargée. Le dispositif de coupe agit dans la partie basse et sur toute la largeur de la botte. Toutefois, après la coupe mécanisée du moyen de liaison, celui-ci doit toujours être dégagé et retiré manuellement par l'opérateur.

Le document FR3084239 propose une solution dans laquelle le moyen de liaison sectionné est enfilé manuellement autour d'un treuil à tambour vertical. Cependant, si l'extraction du moyen de liaison est plus facile grâce au treuil, l'opérateur doit toujours, après le sectionnement du moyen de liaison, séparer les différents liens de la botte et les extraire partiellement pour enrouler, sur au moins un tour, le moyen de liaison autour du tambour en tirant sur l'extrémité libre dudit moyen de liaison, puis l'opérateur doit commander la rotation du treuil pour extraire ledit moyen de liaison et le collecter sur le tambour. Avec une telle solution, il reste donc toujours au moins une action qui doit être exécutée manuellement par l'opérateur pour saisir le moyen de liaison en vue de son extraction complète par le treuil.

La présente invention a pour but de pallier ces inconvénients en proposant un procédé de préhension et d'extraction du moyen de liaison d'une botte cylindrique ou parallélépipédique chargée dans une machine et une telle machine convenant à la mise en œuvre dudit procédé.

A cet effet, le procédé de préhension et d'extraction du moyen de liaison d'une botte cylindrique ou parallélépipédique chargée dans une machine destinée à charger, défaire, distribuer et/ou transformer une telle botte, ladite machine comprenant un caisson et une surface de réception sur laquelle repose une telle botte maintenue en forme par un moyen de liaison s'étendant au niveau de la surface externe de ladite botte, se caractérise essentiellement en ce qu'il consiste, à partir d'une telle machine comprenant en outre un dispositif de préhension et d'extraction dudit moyen de liaison, ledit dispositif comprenant un moyen de préhension et des moyens d'extraction, suite à une étape de sectionnement du moyen de liaison :
- dans une étape de préhension : à déplacer les moyens de préhension depuis une première position éloignée de la surface externe de la botte jusqu'à une deuxième position au niveau de ladite surface externe où s'étend le moyen de liaison, puis à saisir le moyen de liaison à l'aide dudit moyen de préhension,
- dans une étape d'extraction : à extraire, grâce aux moyens d'extraction, le moyen de liaison de la botte en l'écartant de la surface externe de la botte.

La machine, selon la présente invention, destinée à charger, défaire, distribuer et/ou transformer une botte cylindrique ou parallélépipédique maintenue en forme par un moyen de liaison s'étendant au niveau de la surface externe de ladite botte, ladite machine comprenant un caisson et une surface de réception, se caractérise essentiellement en ce qu'elle comprend en outre un dispositif de préhension et d'extraction dudit moyen de liaison comprenant :
- un moyen de préhension configuré pour pouvoir saisir le moyen de liaison d'une telle botte reposant sur ladite surface de réception,
- des moyens d'extraction configurés pour pouvoir agir sur le moyen de liaison de sorte à pouvoir l'extraire de la botte en l'écartant de sa surface externe,
   et étant configuré pour pouvoir déplacer ledit moyen de préhension au-dessus de ladite surface de réception entre une première position lui permettant d'être éloignés de la surface externe de la botte et une deuxième position lui permettant, pour saisir le moyen de liaison, d'être positionné au niveau de ladite surface externe.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :
[Fig. 1] est une vue de côté d'une machine selon la présente invention, du type pailleuse, montrant une botte cylindrique (trait continu) ou parallélépipédique (trait interrompu) chargée dans ladite machine sur une surface de réception formée par la porte du caisson en position ouverte à l'arrière de ladite machine,
[Fig. 2] est une vue en perspective de la partie arrière de la machine représentée sur la figure 1, au début de l'étape de préhension où le moyen de préhension est en cours de déplacement vers sa deuxième position,
[Fig. 3] est une vue en perspective partielle de la partie arrière de la machine représentée sur la figure 2, lorsque le moyen de préhension s'étend dans la surface externe de la botte,
[Fig. 4] montre la machine représentée sur la figure 3, à la fin de l'étape de préhension lorsque le moyen de préhension a été actionné pour changer d'état et passer dans l'état de préhension ou fermé saisissant le moyen de liaison,
[Fig. 5] montre la machine représentée sur la figure 4, au début de l'étape d'extraction lorsque le moyen de préhension est éloigné de la surface externe de la botte au-dessus de cette dernière,
[Fig. 6] est une vue arrière de la machine représentée sur la figure 5 et dans la même configuration,
[Fig. 7] montre la machine représentée sur la figure 5 dans une phase ultérieure de l'étape d'extraction lorsque le moyen de liaison, saisi par le moyen de préhension, a été rabattu sur un côté de la machine,
[Fig. 8] est une vue en perspective partielle de côté de la machine représentée sur la figure 1, dans une phase finale de l'étape d'extraction permettant l'extraction complète du moyen de liaison par enroulement sur un plateau rotatif,
[Fig. 9] montre la machine telle que représentée sur la figure 8, dans une étape de libération du moyen de liaison enroulé sur le plateau rotatif par un retrait des broches d'enroulement,
[Fig. 10] est une vue de face du double peigne du moyen de préhension de la machine selon la présente invention représentée à la figure 2, dans l'état d'attente ou ouvert dudit double peigne situé au-dessus de la surface externe de la partie haute de la botte,
[Fig. 11] montre le double peigne de la figure 10 dans une phase de fonctionnement de la machine telle que représentée à la figure 3, agissant au niveau de la surface externe de la partie haute de la botte, dans l'état d'attente ou ouvert dudit double peigne,
[Fig. 12] montre le double peigne représenté sur la figure 11 et actionné dans l'état de préhension ou fermé, avec le moyen de liaison emprisonné dans les espaces clos du double peigne,
[Fig. 13] est une vue en perspective d'un élément en forme de griffe que comprend le moyen de préhension dans une autre forme de réalisation et agissant dans la partie basse de la botte sous cette dernière.

Les figures annexées montrent une machine destinée à charger, défaire, distribuer et/ou transformer une botte B cylindrique ou parallélépipédique maintenue en forme par un moyen de liaison L s'étendant au niveau de la surface externe S de ladite botte B, ladite machine comprenant un caisson C et une surface de réception P1.

Conformément à la présente invention, une telle machine comprend en outre un dispositif de préhension et d'extraction dudit moyen de liaison L comprenant :
- un moyen de préhension 1 configuré pour pouvoir saisir le moyen de liaison L d'une telle botte B reposant sur ladite surface de réception P1,
- des moyens d'extraction configurés pour pouvoir agir sur le moyen de liaison L de sorte à pouvoir l'extraire de la botte B en l'écartant de sa surface externe S.

Toujours conformément à la présente invention, le dispositif de préhension et d'extraction est configuré pour pouvoir déplacer ledit moyen de préhension 1 au-dessus de ladite surface de réception P1 entre une première position lui permettant d'être éloigné de la surface externe S de la botte B et une deuxième position lui permettant, pour saisir le moyen de liaison L, d'être positionné au niveau de ladite surface externe S.

Grâce à ces caractéristiques, les opérations de préhension et d'extraction sont opérées par des moyens mécaniques. De manière avantageuse, l'opération de préhension et l'opération d'extraction se déroulent chacune sans intervention de travail par l'opérateur. On dit qu'elles sont automatiques, elles se déroulent sans la présence de l'opérateur directement à côté de la machine. L'opérateur peut rester ou s'installer dans la cabine de son tracteur. Puisque ces opérations sont mécanisées, elles sont donc moins pénibles pour l'opérateur. D'une manière avantageuse, le dispositif de préhension et d'extraction du moyen de liaison L est automatique, c'est-à-dire qu'il permet au moins la saisie automatique du moyen de liaison L. Par ailleurs, le dispositif de préhension et d'extraction du moyen de liaison L permet de retirer/extraire automatiquement au moins partiellement le moyen de liaison L de la botte B. Il s'agit de séparer le moyen de liaison L, préalablement coupé, d'avec la botte B, pour éviter des dysfonctionnements, des pannes de la machine du fait de l'introduction d'un moyen de liaison L ou d'un morceau de moyen de liaison L dans la machine. D'une manière préférentielle, ce dispositif permet de retirer/extraire automatiquement complètement le moyen de liaison L de sorte que le moyen de liaison L n'est plus en contact avec la botte B. qui est alors dépourvue de moyen de liaison L et peut être traitée par la machine.

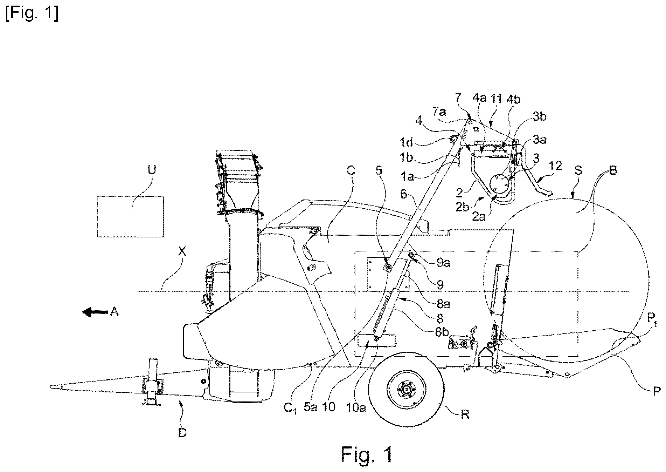

Avantageusement, la surface de réception P1 s'étend au moins partiellement à l'arrière du caisson C. De préférence, la surface de réception P1 peut être formée, comme on peut le voir sur les figures 1, 2, 6 et 7, par la porte P du caisson C, en position ouverte de ladite porte P, plus particulièrement à l'arrière de la machine. La surface de réception P1 est plus particulièrement formée par la face interne de ladite porte P. Dans l'exemple de réalisation représenté à la figure 1, la surface de réception P1 (face interne) dispose d'une partie droite et d'une partie incurvée. La partie incurvée réalise une surface d'appui pour la botte cylindrique alors que la partie droite réalise une surface d'appui pour la botte parallélépipédique (trait interrompu). La porte P, en position ouverte, forme une prolongation du fond C1 du caisson C vers l'extérieur. Cette porte P permet le chargement d'une botte B cylindrique dans la machine, elle est commandée par un actionneur. Dans une autre forme de réalisation non représentée, la surface de réception P1 peut être formée directement par le fond C1 du caisson C.

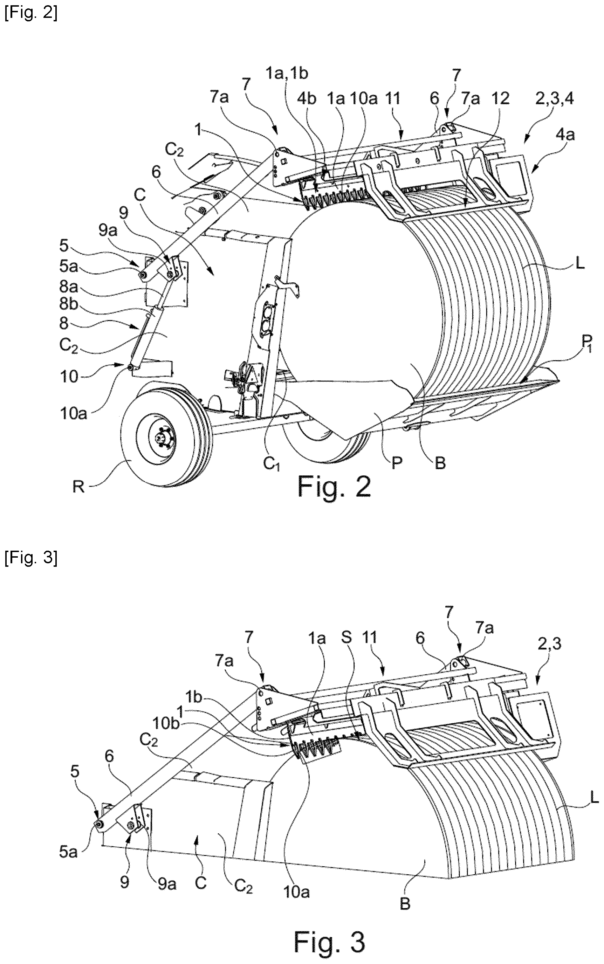

On entend par surface externe S de la botte B une couche externe de matière comprenant ladite surface externe S et une épaisseur de matière sous et à proximité de ladite surface externe S. On comprend alors que le moyen de liaison L peut s'étendre au niveau de ladite surface externe S en s'étendant sur la surface externe S et/ou dans l'épaisseur (ou la matière) de ladite botte B à proximité de ladite surface externe S. On comprend également que, dans sa deuxième position au niveau de la surface externe S, le moyen de préhension 1 peut s'étendre ou pénétrer dans ladite couche externe, c'est à dire dans l'épaisseur (ou la matière) de la botte B (figures 3, 4, 11 et 12).

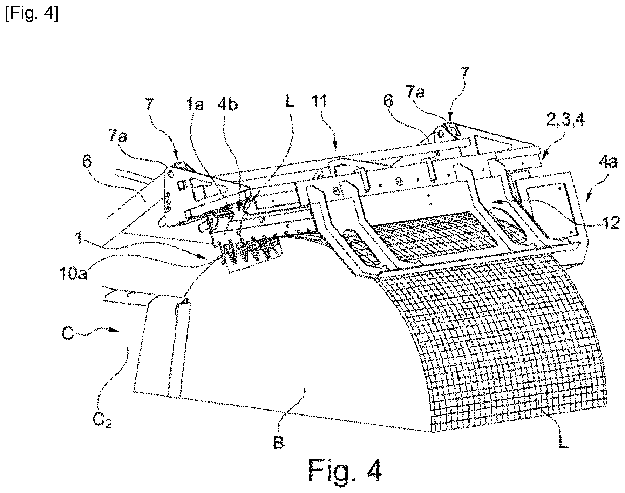

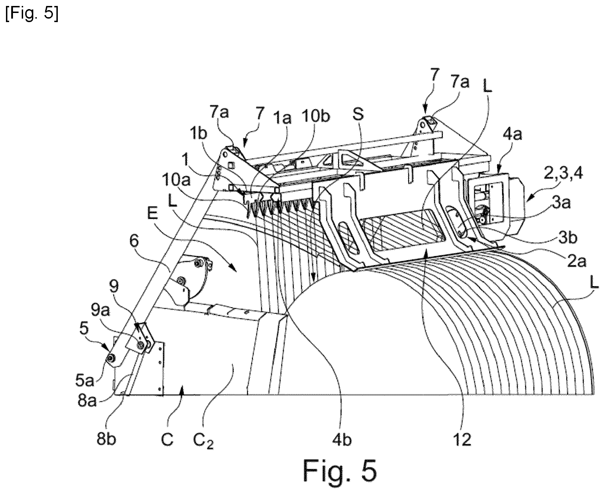

Le moyen de liaison L peut s'étendre sur tout ou partie de la surface externe S de la botte B. Par exemple, comme on peut le voir notamment sur les figures 2, 3, et 5, dans le cas d'une botte B cylindrique, comme c'est le cas habituellement notamment pour un moyen de liaison du type ficelle, le moyen de liaison L peut s'étendre sur sa surface externe S cylindrique entre ses deux extrémités circulaires, c'est-à-dire sans s'étendre au niveau desdites extrémités circulaires. La botte B cylindrique représentée sur la figure 4 dispose d'un moyen de liaison L du type filet. Ce type de moyen de liaison L (filet) peut recouvrir l'extrémité circulaire proche de la surface externe S de la botte B sur quelques centimètres (pas visible sur la figure 4).

La botte B est réalisée par une presse qui ramasse et conditionne les andains de foin ou de paille. La botte B est formée dans la chambre de pressage ou de compression de la presse et un système de liage applique le moyen de liaison L, par exemple un ou plusieurs liens ou couches autour de la botte B. Grâce à ce moyen de liaison L, la forme de la botte est conservée. La presse a pour objet la réalisation de bottes ou balles de fourrage denses, stables et homogènes qui sont alors facile à manipuler et à stocker. Le moyen de liaison L ceinture la botte B dans sa forme comprimée issue de la chambre de pressage. Il s'étend au moins sur une partie de la surface externe de la botte. Le moyen de liaison L serre et lie ensemble le fourrage constituant la botte B. Le moyen de liaison permet de conditionner la botte B pour qu'elle conserve sa forme compressée. Le moyen de liaison L est appliqué sur au moins toute la largeur de la botte B pour limiter les pertes et pour assurer que tout le fourrage soit/reste dans la botte B. Le moyen de liaison L est par exemple du type ficelle, filet ou film. Les flancs de la botte B, de part et d'autre de la surface externe S, sont dépourvus de moyen de liaison L. Le dispositif de préhension et d'extraction de l'invention est destiné à saisir et à extraire le moyen de liaison L présent au niveau de la surface externe S de la botte B, c'est-à-dire sur ladite surface externe S et/ou dans l'épaisseur de la botte B à proximité de ladite surface externe S. Le dispositif de l'invention est apte et destiné à saisir le moyen de liaison L qui couvre au moins partiellement la surface externe S de la botte B. Le dispositif de l'invention n'intervient pas au niveau des flancs de la botte B puisque le moyen de liaison L ne s'étend pas sur les flancs ou ne couvre pas les flancs. Le dispositif de l'invention n'est pas destiné à agir sur une botte emballée c'est-à-dire que la botte est totalement enveloppée avec du film plastique pour que le fourrage ici de l'herbe soit privé d'oxygène. Une telle botte emballée ou enrubannée est fermée hermétiquement puisque la surface externe S comme les flancs sont recouverts de plusieurs couches de film plastique.

Dans le cas d'une presse à balles rondes, la forme de la botte est cylindrique et c'est sur la surface cylindrique de la botte B que le moyen de liaison L est appliqué. Les flancs ou extrémités circulaires de la botte B sont dépourvus de moyen de liaison L. Lorsque le moyen de liaison L est du type ficelle, plusieurs ficelles ou plusieurs tours de ficelles sont appliqués autour de la botte B pour lui permettre de conserver sa forme. La ficelle est répartie sur la surface cylindrique de la botte B de manière à maintenir la balle cylindrique parfaitement comprimée. Dans le cas d'utilisation de film ou de filet, plusieurs couches sont appliquées sur la surface cylindrique ou autour de sa surface cylindrique dans le but de maintenir sa forme comprimée. Le filet ou le film pourra recouvrir toute la largeur de la surface cylindrique de la botte ou au moins une grande partie de sa largeur. Pour les bottes parallélépipédiques, le système de liage ou le noueur de la presse à haute densité applique plusieurs ficelles ou liens (moyen de liaison L) sur la surface externe S de la botte B. Etant donné la forte compression du fourrage, les ficelles sont généralement plus épaisses. Le moyen de liaison L ceinture les quatre faces de la botte parallélépipédique. Ces quatre faces constituent la surface externe S de la botte parallélépipédique. Les deux autres faces ou flancs de la botte parallélépipédique ne sont pas pourvus de moyen de liaison L.

Lorsque la botte B est de forme cylindrique, celle-ci est de préférence positionnée sur la surface de réception P1 (formée par exemple par une partie incurvée dans la porte P) de sorte que ses deux extrémités circulaires soient sensiblement parallèles aux côtés du caisson C ou de la machine et/ou à la direction d'avance A de la machine et/ou à l'axe longitudinal X de la machine.

La machine, notamment le caisson C ou un châssis de la machine supportant le caisson C, peut être pourvu(e) d'un système d'attelage lui permettant d'être porté(e) par un tracteur au niveau de son attelage trois points. En variante, telle que représentée sur la figure 1, la machine, plus précisément le caisson C, peut être monté sur un châssis F roulant, comportant des roues R, de manière à pouvoir être tirée, par son extrémité d'attelage D, à l'arrière d'un véhicule tracteur (non représenté).

Une telle machine selon la présente invention peut être utilisée dans de nombreuses applications, par exemple pour répandre la paille et former la litière, pour mélanger et/ou distribuer du fourrage, voire même, dans un autre domaine que celui des animaux d'élevage, pour décompacter ou déstructurer une telle botte de paille pour en faire des pellets utilisés par exemple pour le chauffage.

Dans le cas où la machine selon la présente invention est du type pailleuse, comme on peut le voir notamment sur les figures 1 à 9, celle-ci peut comprendre un organe rotatif du type démêleur, un moyen de déplacement de la botte B en direction de l'organe rotatif et éventuellement d'une porte P de chargement et de transfert de la botte B. La botte B est notamment déposée dans le caisson C, muni de parois latérales C2, pour être déstructurée et répartie sur le sol sur un andain au niveau d'une table d'alimentation ou alors répartie largement sur la surface du sol grâce à une turbine qui expulse la paille à plusieurs mètres. Le moyen de déplacement est placé dans le caisson C et peut être un tapis à chaines, par exemple avec des barrettes. Alternativement, le moyen de déplacement est un convoyeur à tapis. La porte P peut être montée de manière articulée sur le caisson C, par exemple à l'arrière de la machine ou du caisson C, entre une position de chargement et une position de transfert de la botte B dans le caisson C. La porte P de chargement permet de déplacer la botte B pour libérer le moyen de liaison L et faciliter son extraction. La position de chargement de la porte P peut être la position dans laquelle la botte B peut reposer sur celle-ci pour réaliser la préhension et l'extraction du moyen de liaison L selon la présente invention. On remarque particulièrement sur la figure 1 que, lorsqu'une botte B parallélépipédique est chargée dans la machine, elle s'étend partiellement dans le caisson C et sur la porte P de par sa longueur. Elle repose sur le moyen de déplacement et sur la partie droite de la surface de réception P1.

Le caisson C peut être muni (figures 1 à 9) ou non de parois latérales C2. La pailleuse représentée à la figure 1 est munie de parois latérales C2 permettant de guider la botte vers l'organe rotatif du type démêleur. Les parois latérales C2 permettent également de maintenir la botte B dans le caisson C de manière à ce que, par exemple, la paille qu'elle contient ne tombe pas hors de la machine et puisse être traitée totalement.

Dans un mode de réalisation préférentiel du moyen de préhension 1, ce dernier peut être configuré pour pouvoir changer d'état de sorte à passer, lors de son actionnement, d'un état d'attente à un état de préhension et inversement, ledit état de préhension permettant de saisir le moyen de liaison L.

De préférence, le moyen de préhension 1 peut être configuré pour pouvoir saisir le moyen de liaison L par pincement, emprisonnement, serrage ou accrochage.

Dans l'état d'attente, le moyen de préhension 1 peut être mis dans un état ouvert apte à recevoir le moyen de liaison L et dans l'état de préhension les moyens de préhension 1 peuvent être mis dans un état fermé (ou clos) apte à emprisonner, serrer ou pincer le moyen de liaison L.

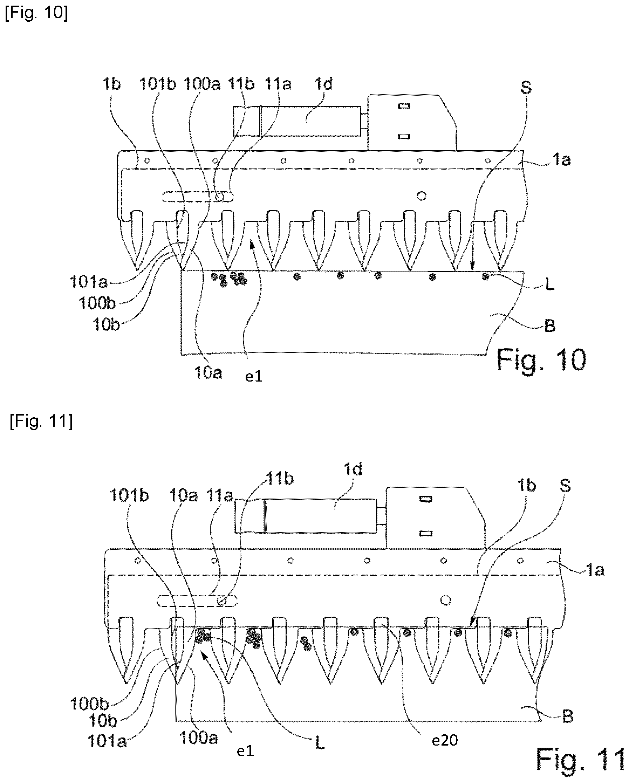

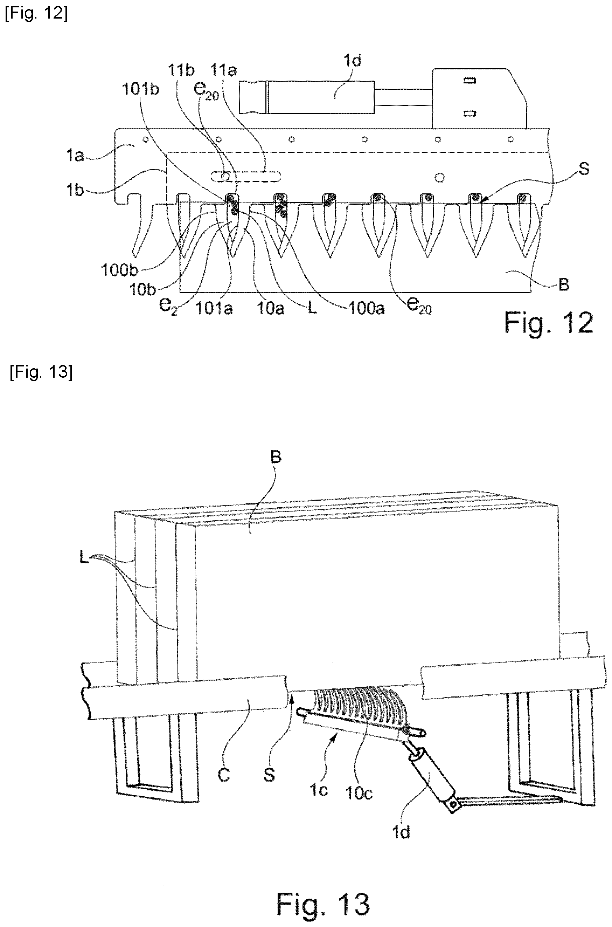

Le passage de l'état d'attente ou ouvert (figures 10 et 11) à l'état de préhension ou fermé (figure 12) du moyen de préhension 1 peut être réalisé lorsque le moyen de préhension 1 est dans sa deuxième position au niveau de la surface externe S de la botte B, le cas échéant en pénétrant ou se prolongeant dans l'épaisseur (ou la matière) de la botte B (figure 3), pour saisir le moyen de liaison L.

Les figures 10 à 12 représentent, à une échelle plus grande que les figures respectives 2 à 4, une partie du moyen de préhension 1 ainsi qu'une partie de la surface externe S de la botte B avec le moyen de liaison L du type ficelle représenté schématiquement. En pratique les différents tours, qui forment les liens, du moyen de liaison L qui entoure la botte B restent « cachés » au niveau de la surface externe S de la botte B même après avoir été sectionnés puisqu'ils exerçaient une tension sur le produit/la matière (paille, foin) constituant la botte B pour le ou la maintenir en forme.

Dans une forme de réalisation préférentielle, lorsque le moyen de préhension 1 est configuré pour pouvoir changer d'état, ledit moyen de préhension 1 peut être configuré pour former, dans l'état d'attente ou ouvert, des espaces e1 ouverts aptes à recevoir le moyen de liaison L (figure 10), c'est-à-dire la partie du moyen de liaison L rencontrant le moyen de préhension 1 et, dans l'état de préhension ou fermé (figure 12), des espaces e2 clos (ou fermés), par exemple en forme d'œillet, dans lesquels ledit moyen de liaison L est emprisonné avec pour effet sa saisie.

Le passage entre l'état d'attente ou ouvert (figure 10) et l'état de préhension ou fermé (figure 12) du moyen de préhension 1 peut correspondre à un état transitoire (non représenté) actif ou non.

Toujours dans la forme de réalisation préférentielle lorsque le moyen de préhension 1 est configuré pour pouvoir changer d'état, ledit moyen de préhension 1 peut comprendre au moins un élément de saisie 1a, 1b, 1c mobile apte, lors du passage de l'état d'attente à l'état de préhension du moyen de préhension 1, à être déplacé en translation, de préférence en translation rectiligne (voir notamment les figures 2 à 7, 10, 11, 12) ou suivant une autre trajectoire, par exemple hélicoïdale. La trajectoire, par exemple hélicoïdale, de l'élément de saisie 1c mobile concerné peut être réalisée dans la partie basse de la botte B sous cette dernière.

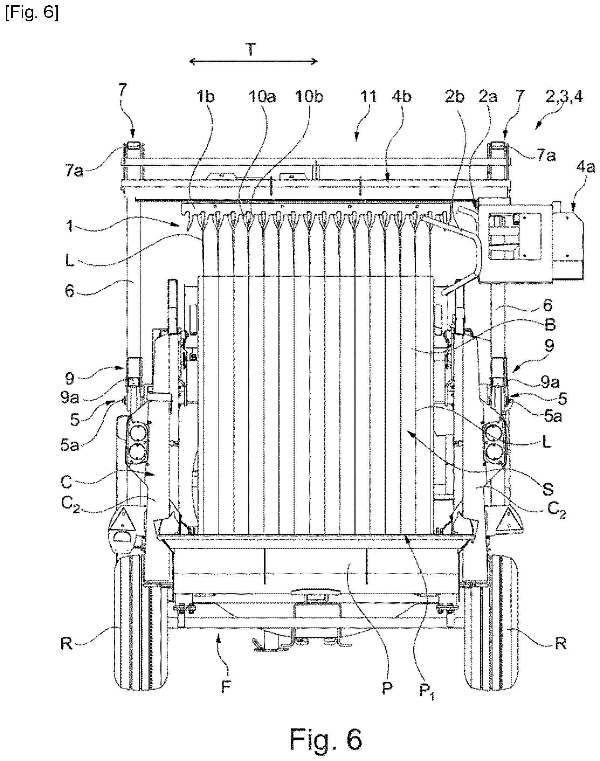

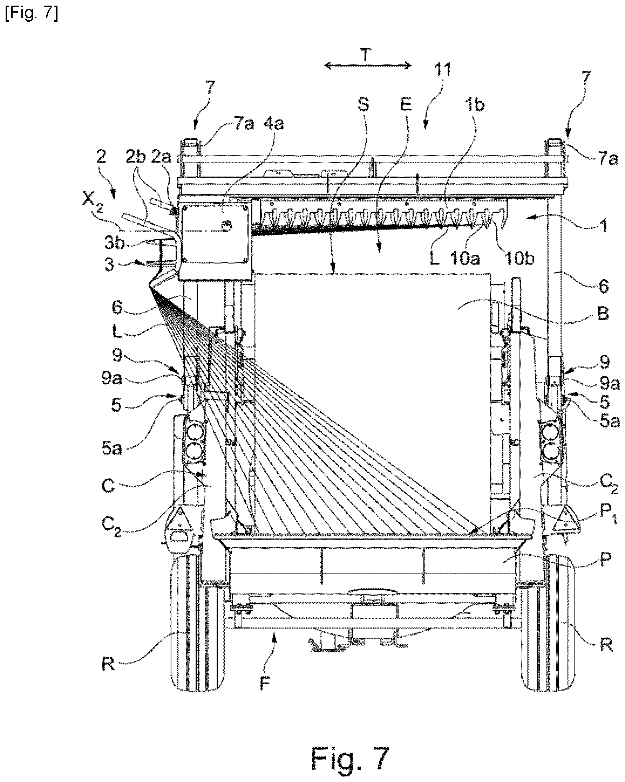

Selon l'exemple de réalisation représenté, le moyen de préhension 1 s'étend transversalement par rapport à la direction d'avance A et sensiblement sur la largeur de la machine (figures 6 et 7). Comme on peut le voir plus particulièrement sur les figures 6, 7 et 10 à 12, lorsque ledit moyen de préhension 1 comprend au moins un élément 1a, 1b de saisie mobile en translation rectiligne, ledit moyen de préhension 1, dans une forme préférentielle, peut comprendre un double peigne comportant deux peignes 1a, 1b munis d'une série de dents 10a, 10b aptes à pénétrer dans l'épaisseur de la botte B. On remarque également que, dans le cas d'une botte cylindrique telle que représentée à la figure 6, de préférence, les peignes 1a, 1b dépassent ou s'étendent au-delà des extrémités circulaires. De cette manière, on s'assure que tous les liens du moyen de liaison L sont saisis en même temps. Les deux peignes 1a, 1b s'étendent parallèlement l'un derrière l'autre et au moins l'un desdits peignes 1a, 1b forme le ou l'un des élément(s) de saisie mobile. Au moins l'un desdits peignes 1a, 1b, de préférence chaque peigne 1a, 1b, est mobile en translation rectiligne, l'un par rapport à l'autre, suivant la direction de son axe longitudinal. Sur les figures 11 et 12, on peut voir que les dents 10a et 10b ont pénétré dans l'épaisseur de la botte B. Avec ce dispositif de préhension et d'extraction, tous les liens du moyen de liaison L sont saisis simultanément sur la largeur de la botte B, ce qui est un gain de temps par rapport à un saisie manuelle et individuelle de chaque lien. De manière alternative et non représentée, le au moins un élément de saisie formant le moyen de préhension 1 est réalisé à partir de plusieurs sections.

Pour permettre le guidage en translation des deux peignes 1a, 1b l'un par rapport à l'autre, l'un des deux peignes 1b peut comprendre au moins un coulisseau 11b et l'autre peigne 1a peut comprendre au moins une fente longitudinale 11a dans laquelle peut coulisser ledit coulisseau 11b (figures 10, 11, 12).

Le ou chaque peigne 1a, 1b formant le ou l'un des élément(s) 1a, 1b de saisie mobile du moyen de préhension 1 peut être actionné en déplacement au moyen d'un actionneur 1d, par exemple du type vérin que peut comprendre les moyens de préhension 1 (figure 1). Dans le cas où l'un des deux peignes 1a, 1b n'est pas rendu mobile il forme alors un élément de saisie fixe par rapport à l'autre peigne 1a, 1b mobile.

A l'état d'attente ou ouvert du moyen de préhension 1, la forme des dents 10a, 10b peut être définie de sorte que deux dents 10a, 10b successives des deux peignes 1a, 1b respectifs peuvent former ensemble un espace e1 ouvert apte à recevoir le moyen de liaison L (figure 11), c'est-à-dire la partie du moyen de liaison L rencontrée par les peignes 1a, 1b dans la position d'attente. La forme des dents 10a, 10b est également définie de sorte que, à l'état de préhension ou fermé du moyen de préhension 1, deux dents 10a, 10b successives des deux peignes 1a, 1b respectifs peuvent former ensemble un espace e2 clos, par exemple en forme d'œillet,apte à emprisonner le moyen de liaison L (figure 12), c'est-à-dire la partie du moyen de liaison L insérée dans les espaces e1 ouverts à l'état d'attente ou ouvert. La forme d'une dent 10a, 10b est de préférence courbée, par exemple en forme d'arc, dans le plan du peigne 1a, 1b. Chaque dent 10a, 10b peut alors présenter une face externe 100a, 100b ou extrados et une face interne 101a, 101b ou intrados. La courbure permet avantageusement de guider le moyen de liaison L dans les espaces e1 ouverts entre les dents 10a, 10b.

Comme on peut le voir également sur les figures 10, 11 et 12, la courbure de l'un des peignes 1a peut être inversée par rapport à la courbure de l'autre peigne 1b de sorte que chaque espace e2 clos est défini par l'espace délimité entre la face interne 101 a d'une dent 10a appartenant à l'un des deux peignes 1a et la face interne 101b d'une dent 10b appartenant à l'autre peigne 1b (figure 12). L'espace e1 ouvert est défini par l'espace délimité entre la face externe 100a d'une dent 10a appartenant à l'un des deux peignes 1a et la face externe 100b d'une dent 10b appartenant à l'autre peigne 1b (figure 11).

Dans l'état d'attente ou ouvert du moyen de préhension 1, les zones creuses des deux peignes 1a, 1b peuvent alors se superposer et former une partie de l'espace e2 clos entre deux dents 10a, 10b (figure 11). Il en est de même dans l'état de préhension ou fermé, les zones creuses peuvent se superposer (figure 12). Elles peuvent ainsi recevoir le moyen de liaison L. Dans la configuration transitoire du moyen de préhension 1, les zones creuses peuvent s'obstruer réciproquement. A l'état de préhension ou fermé (figure 12) l'espace clos e2 peut former un volume (ou un passage ou une lumière), par exemple en forme d'œillet, à travers lequel peut passer le moyen de liaison L, par exemple un ou plusieurs lien(s) constituant ledit moyen de liaison L lorsque celui-ci est du type filet.

Ainsi, lors du passage de l'état d'attente ou ouvert (figure 11) à l'état de préhension ou fermé (figure 12) du moyen de préhension 1, la translation rectiligne d'au moins l'un des deux peignes 1a, 1b dans l'axe du double peigne 1a, 1b a pour effet d'emprisonner le moyen de liaison L dans les espaces e2 clos entre deux dents 10a, 10b et de saisir le moyen de liaison en vue de son extraction (figure 12).

D'une manière avantageuse, le volume de l'espace clos e2 entre deux dents 10a, 10b dans l'état de préhension ou fermé (figure 12) est supérieur ou égal au volume de l'espace ouvert e1 entre deux dents 10a, 10b dans l'état d'attente ou ouvert (figure 11). De manière particulièrement avantageuse, l'espace clos e2 est doté d'un espace additionnel e20 par rapport à l'espace ouvert e1. Cet espace additionnel e20 est un agrandissement dans le sens de la hauteur pour créer une zone de stockage du moyen de liaison L ou des liens de ce dernier pour éviter qu'ils s'échappent lors de la préhension c'est-à-dire lors du changement d'état des peignes 1a, 1b.

On se réfère maintenant à la figure 13 qui représente l'exemple de réalisation d'une machine pour la fabrication de granulés utilisés notamment comme combustible. Avant d'arriver dans la machine qui déstructure la botte B de paille pour la reconditionner en granulés, le moyen de liaison L ceinturant la botte B parallélépipédique doit être retiré. Dans l'exemple, la machine comprend un caisson C ou plateforme avec une surface de référence P1 destinée à recevoir la botte B, la botte parallélépipédique représentée est entourée de trois liens du moyen de liaison L. Cette machine est placée/posée sur le sol. Elle comprend un dispositif de préhension et d'extraction selon l'invention qui est disposé sous la botte B et sous le caisson C. Seul le moyen de préhension 1 est représenté sous la forme d'au moins un élément 1c de saisie mobile suivant une trajectoire autre qu'en translation, par exemple une trajectoire hélicoïdale. Dans cette forme de réalisation particulière du moyen de préhension 1 l'élément de saisie 1c mobile peut être en forme de griffe, ou de traverse, munie de dents 10c (figure 13). De préférence un tel élément de saisie 1c s'étend transversalement sous la botte B et dispose, préférentiellement, d'une largeur sensiblement égale à la largeur de la botte B. Un tel élément 1c de saisie mobile peut être actionné au moyen d'un actionneur 1d, par exemple du type vérin. Les moyens d'extraction ne sont pas représentés sur cette figure.

Si on se réfère aux figures 1 à 9, on peut voir que le dispositif de préhension et d'extraction peut être est monté de manière articulée sur le caisson C et peut comprendre à cet effet au moins une articulation 5 comportant au moins un axe de pivotement 5a, de préférence au moins un axe de pivotement 5a horizontal, et au moins un bras 6, de préférence deux bras 6, pivotant autour du ou de l'un des axes de pivotement 5a et supportant au moins le moyen de préhension 1 de sorte à permettre leur déplacement dans la première position et dans la deuxième position. De préférence le ou les bras 6 pivotant peuvent être prévus pour supporter ou porter ledit moyen de préhension et les moyens d'extraction comme on peut le voir sur les figures 1 à 9. Les deux bras 6 pivotant peuvent être, de préférence, disposés de chaque côté du caisson C ou de la machine. On entend par axe de pivotement 5a horizontal un axe de pivotement 5a s'étendant horizontalement ou parallèlement à la surface du sol sur laquelle évolue ou est posée la machine. De préférence, le ou chaque axe de pivotement 5a peut s'étendre transversalement à la direction d'avance A de la machine ou à l'axe longitudinal X de ladite machine. De préférence, la ou chaque articulation 5 peut être montée sur l'une des parois latérales C2 opposées du caisson C, de préférence sur la face externe de ladite paroi latérale C2 concernée, lorsque ledit caisson C comprend de telles parois latérales C2 opposées. La ou chaque articulation 5 peut aussi être montée sur une autre partie de la machine, qui peut être distincte du caisson C.

Le ou chaque bras 6 pivotant peut être actionné au moyen d'un actionneur 8, par exemple du type vérin (voir notamment les figures 1, 2, 5 à 9). Un tel actionneur 8 peut être monté de manière articulée sur le caisson C et sur le bras 6. L'actionneur 8 du type vérin peut alors être articulé, par l'intermédiaire de sa tige 8a, sur le bras 6 au moyen d'une première articulation 9 et, par l'intermédiaire de son fût 8b, sur le caisson C, par exemple sur l'une de ses parois latérales C2, au moyen d'une deuxième articulation 10. De préférence la première articulation 9 peut être située à proximité de l'articulation 5 du bras 6 sur le caisson C. Les première et deuxième articulations 9, 10 peuvent comprendre chacune un axe de pivotement 9a, 10a, de préférence parallèle à l'axe de pivotement 5a de l'articulation 5 du ou des bras 6 pivotant.

Le déplacement, plus particulièrement en pivotement, grâce au(x) bras 6 pivotant, du moyen de préhension 1, peut être effectué de sorte à atteindre le niveau de la surface externe de la botte B dans la partie haute ou basse de la botte et/ou en venant par le dessus (figures 1 à 9) ou par le dessous de la botte B tel que représenté à la figure 13. Pour la mécanisation de l'opération préliminaire de préhension, il est connu d'utiliser un dispositif de coupe intégré par exemple dans la porte P, au niveau de la partie incurvée, qui permettra de couper le moyen de liaison L pour une botte B cylindrique dans le cas d'une pailleuse. Alternativement, le dispositif de coupe est prévu au niveau du caisson C pour les bottes B parallélépipédiques.

Le ou chaque bras 6 pivotant peut supporter le moyen de préhension 1 et, le cas échéant, les moyens d'extraction par l'intermédiaire d'une rampe support 11 transversale que peut comprendre en outre le dispositif. Ainsi le ou chaque bras 6 pivotant peut être monté de manière articulée, d'une part, à l'une de ses extrémités, par l'intermédiaire de l'articulation 5, sur le caisson C et, d'autre part, à son autre extrémité, par l'intermédiaire d'une articulation 7, sur la rampe support 11. La ou chaque articulation 7 sur la rampe support 11 peut comprendre un axe de pivotement 7a, de préférence parallèle à l'axe de pivotement 5a de l'articulation 5 du bras 6 sur le caisson C (figures 1 à 9).

Dans une forme de réalisation préférentielle des moyens d'extraction, ceux-ci peuvent comprendre, comme on peut le voir sur les figures 1 à 9 des moyens de rabattement 2 aptes à être déplacés et étant configurés pour pouvoir venir, lors de leur déplacement, s'appliquer contre le moyen de liaison L de sorte à le rabattre sur ou au-delà d'un côté du caisson C ou de la machine. On entend par « sur un côté », une position de rabattement sensiblement au niveau, en retrait ou au-delà du côté (paroi latérale C2) concerné du caisson C ou de la machine. On entend par « au-delà d'un côté » une position de rabattement éloignée dudit côté. D'une manière avantageuse, l'extraction du moyen de liaison L est réalisée sur le côté gauche de la machine ou du caisson C (compte tenu de la direction d'avance A). Le côté gauche est plus pratique puisque d'ordinaire l'opérateur sort de la cabine du tracteur à gauche. Dans une alternative l'extraction du moyen de liaison L est réalisée sur le côté droit de la machine.

De préférence, pour pouvoir réaliser ce déplacement, les moyens d'extraction peuvent comprendre en outre un système d'entraînement 4 permettant d'assurer le déplacement des moyens de rabattement 2. Le système d'entraînement 4 peut comprendre, de préférence, un chariot 4a d'entraînement mobile en translation, de préférence en translation rectiligne, d'un côté à l'autre du caisson C ou de la machine. On comprend que le chariot 4a peut être déplacé entre deux côtés opposés du caisson C ou de la machine ou au-delà d'au moins l'un desdits côtés du caisson C ou de la machine (figure 7). Les moyens de rabattement 2 peuvent alors être montés solidairement sur ledit chariot 4a d'entraînement mobile. En outre, les moyens de rabattement 2 peuvent comprendre des guides 2b permettant de collecter, rassembler et guider le moyen de liaison L rencontrant lesdits moyens de rabattement 2 lors de leur déplacement. Les moyens de rabattement 2 peuvent fonctionner sans de tels guide 2b mais moins efficacement.

Le déplacement des moyens de rabattement 2 peut être prévu lorsque le moyen de préhension 1 est déplacé dans sa première position de sorte à laisser un espace E, entre ces derniers et la surface externe S, par exemple la surface externe S cylindrique, de la botte B, permettant le passage des moyens de rabattement 2, le cas échéant du chariot 4a d'entraînement portant ces derniers (voir notamment la figure 7). On comprend que la première position peut ainsi être déterminée de manière à laisser un tel espace E de passage pour les moyens de rabattement 2 entre les moyens de préhension 1 et la surface externe S de la botte B.

Dans une forme de réalisation préférentielle, comme on peut le voir sur les figures 1 à 9, les moyens de rabattement 2 peuvent comprendre un plateau 2a de rabattement, de préférence orienté transversalement à la direction T de déplacement desdits moyens de rabattement 2. De préférence, lesdits moyens de rabattement 2 peuvent comprendre en outre les guides 2b. Ainsi, lors du déplacement des moyens de rabattement 2, le moyen de liaison L peut être guidé par lesdits guides 2b vers et contre ledit plateau 2a de rabattement pour assurer efficacement son rabattement sur ou au-delà d'un côté du caisson C ou de la machine (figure voir notamment la figure 7). Avec à un tel dispositif de préhension et d'extraction, l'opération de retrait du moyen de liaison L de la botte B est grandement simplifiée et apporte un confort à l'opérateur puisque le moyen de liaison L est rassemblé sur l'un des côtés du caisson C (figure 7). L'opérateur peut alors rapidement saisir le moyen de liaison L (ou l'ensemble des liens du moyen de liaison L) et l'extraire (complètement).

De préférence, le chariot d'entraînement 4a peut être rendu mobile en translation dans une direction T transversale ou perpendiculaire par rapport à la direction d'avance A de la machine ou à l'axe longitudinal X de la machine. Les moyens de rabattement 2 sont alors déplacés dans ladite direction T.

De manière à pouvoir guider le déplacement du chariot 4a, le système d'entraînement 4 peut comprendre des moyens de guidage 4b de l'entraînement du chariot d'entraînement 4a du type rail de guidage et des moyens d'actionnement 4c du type pignon-crémaillère, actionneur, vérin, câble ou chaine.

Dans une forme de réalisation particulière, non représentée sur les figures annexées, des moyens d'extraction ceux-ci peuvent être configurés, notamment par leur disposition et/ou leur amplitude et/ou leur trajectoire de déplacement, de sorte que les moyens de rabattement 2 puissent extraire complètement le moyen de liaison L lorsque celui-ci est rabattu, c'est-à-dire qu'il n'est plus nécessaire de réaliser une autre opération de retrait ou d'extraction, que ce soit manuellement ou automatiquement. Le système d'entraînement 4 peut alors se présenter, par exemple, sous la forme d'un bras d'entraînement portant les moyens de rabattement 2 et éloignant, par son déplacement, complètement le moyen de liaison L de la surface externe S de la botte B sur ou au-delà d'un côté du caisson C ou de la machine. Dans une autre forme sans ledit bras d'entraînement, le système d'entraînement 4 peut comprendre le chariot d'entraînement 4a décrit précédemment et peut être configuré pour que ledit chariot d'entraînement 4a puisse être déplacé sur une distance suffisante pour pouvoir éloigner complètement le moyen de liaison L de la surface externe S de la botte B.

Dans une autre forme de réalisation représentée sur les figures annexées (voir notamment les figures 1 à 9) ne permettant pas aux moyens de rabattement 2 d'extraire complètement le moyen de liaison L lorsque celui-ci est rabattu, les moyens d'extraction peuvent comprendre en outre des moyens de retrait 3 permettant d'extraire (complètement) le moyen de liaison L de la botte B, de préférence par enroulement autour d'un axe d'enroulement X2, de préférence un axe d'enroulement X2 horizontal (voir notamment les figures 1 à 9). Ces moyens de retrait 3 peuvent être actionnés lorsque le moyen de liaison L est rabattu ou lors du rabattement.

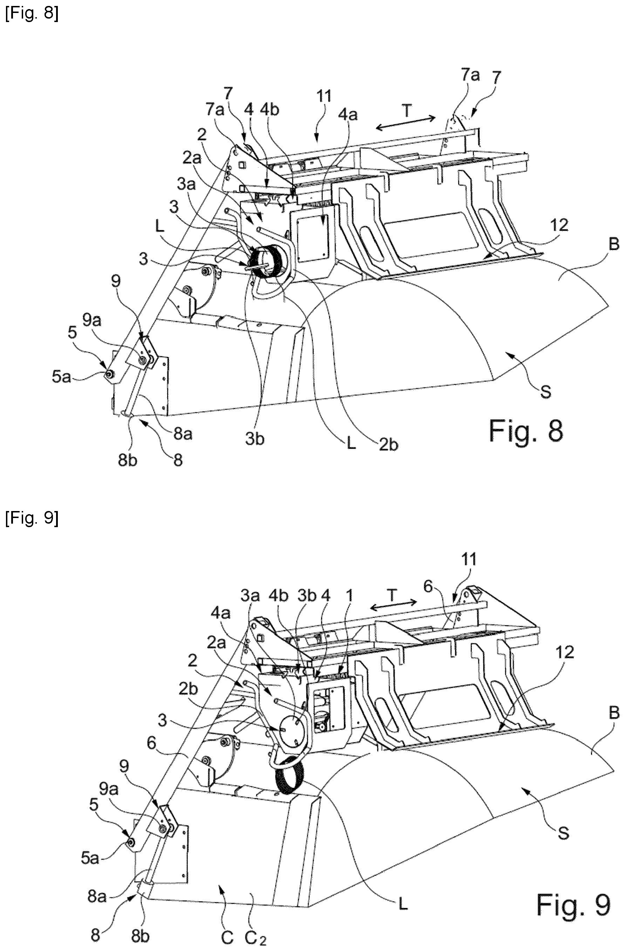

De tels moyens de retrait 3 par enroulement peuvent consister en un enrouleur (visible aux figures 8 et 9), de préférence solidaire des moyens de rabattement 2, le cas échéant du chariot d'entraînement 4a. L'enrouleur peut être configuré pour pouvoir enrouler le moyen de liaison L autour d'un axe d'enroulement X2, de préférence horizontal. On entend par axe d'enroulement X2 horizontal un axe d'enroulement X2 s'étendant horizontalement et/ou parallèlement au fond C1 du caisson C et/ou parallèlement à la surface du sol sur laquelle repose ou évolue la machine.

Si on se réfère aux figures 1 à 9, on peut voir que l'enrouleur 3 peut comprendre, dans une forme préférentielle, un plateau 3a rotatif, par exemple en forme de disque, et au moins deux broches 3b, de préférence trois broches 3b, d'enroulement solidaires en rotation dudit plateau 3a et dépassant dudit plateau 3a, de préférence perpendiculairement à ce dernier, de sorte à pouvoir accrocher le moyen de liaison L et à enrouler ce dernier autour desdites broches 3b lors de la rotation dudit plateau 3a. Le plateau 3a rotatif est monté en rotation autour de l'axe d'enroulement X2.

Dans une forme de réalisation préférentielle, le plateau 3a rotatif peut constituer une partie mobile du plateau 2a de rabattement des moyens de rabattement (voir notamment les figures 1, 5, 8, 9). Le plateau 2a de rabattement comprend alors une partie fixe et la partie mobile formée par le plateau rotatif 3a. On comprend alors que les broches d'enroulement 3b dépassent du plateau 2a de rabattement contre lequel est rabattu le moyen de liaison L.

De préférence, les broches 3b d'enroulement peuvent être montées de manière escamotable dans le plateau 3a rotatif de sorte à pouvoir être déplacées dans une position escamotée ou rentrée libérant le moyen de liaison L (figure 9) et dans une position déployée ou sortie permettant d'assurer l'enroulement (figures 7 et 8). Dans une variante, non représentée sur les figures annexées, lorsque le plateau rotatif 3a constitue une partie du plateau 2a de rabattement, ledit plateau rotatif 3a peut être monté dans le plateau 2a de sorte à pouvoir en outre être déplacé en translation transversalement au plateau 2a de rabattement en arrière de ce dernier pour pouvoir escamoter les broches d'enroulement 3b fixées sur ledit plateau rotatif 3a. Les broches d'enroulement 3b ne dépassent alors plus du plateau 2a de rabattement.

Ainsi, en position escamotée des broches 3b d'enroulement, le moyen de liaison L à l'état enroulé peut être libéré du plateau 3a rotatif. Lors de sa libération, le moyen de liaison peut alors tomber par gravité dans un réceptacle présent sur la machine ou sur le sol à l'extérieur de la machine pour être récupéré par l'opérateur.

Le moyen de liaison L, notamment du type ficelle, peut être libéré du double peigne et notamment lorsque le plateau 3a rotatif a déjà effectué quelques tours pour pouvoir enrouler le moyen de liaison L autour des broches 3b. Plus particulièrement, dans la forme du moyen de préhension 1 en double peigne et dans le cas d'un moyen de liaison L de type ficelle, le moyen de liaison L n'a pas besoin d'être libéré ou relâché du double peigne c'est-à-dire en actionnant ce dernier pour le faire passer de son état de préhension ou fermé à son état d'attente ou ouvert, le moyen de liaison L glissant naturellement entre les dents 10a, 10b des deux peignes 1a, 1b respectifs sous l'effet de l'enroulement. Lorsque le moyen de liaison L présente une autre forme, par exemple du type filet, le double peigne 1a, 1b peut être actionné à l'état ouvert pour libérer le moyen de liaison L.

Si on se réfère à nouveau aux figures 1 à 5, 8 et 9, on peut voir que le dispositif de préhension et d'extraction peut comprendre en outre des moyens de détection 12 de la surface externe S de la botte B afin de détecter la deuxième position à atteindre pour le moyen de préhension 1. De tels moyens de détection 12 peuvent consister en un palpeur mécanique opérant par contact avec la surface externe S de la botte B lors du déplacement du moyen de préhension 1 depuis leur première position vers leur deuxième position.

Le dispositif de préhension et d'extraction peut comprendre un boîtier de commande ou autre interface de commande (représenté(e) sur la figure 1) relié(e) fonctionnellement, notamment, par l'intermédiaire des actionneurs concernés ou des éléments d'entraînement tels que le chariot 4b d'entraînement :
- aux bras 6 pivotant pour commander leur actionnement,
- au dispositif de détection 12 afin de commander l'arrêt du déplacement du moyen de préhension 1 entre sa première position et sa deuxième position lorsque la surface externe S de la botte B est détectée signifiant que ledit moyen de préhension 1 a atteint sa deuxième position permettant la saisie du moyen de liaison L,
- aux moyens de rabattement 2 pour commander leur déplacement,
- le cas échéant, au plateau 3a rotatif pour commander sa rotation afin d'effectuer l'enroulement du moyen de liaison L,
- le cas échéant, aux broches 3b ou au plateau rotatif 3a pour commander leur sortie afin de libérer le moyen de liaison L enroulé.

Le boîtier de commande peut comprendre une unité de commande électronique U (représentée schématiquement sur la figure 1), pour gérer les différentes fonctionnalités du dispositif selon une ou plusieurs séquences programmées permettant de commander automatiquement l'ensemble ou une partie des opérations de préhension et d'extraction du moyen de liaison L. Pour permettre un tel automatisme ou séquencement, la machine et/ou le dispositif de préhension et d'extraction est/sont doté(e)(s) d'un ou plusieurs dispositif(s) de détection. Un tel dispositif de détection comprend, par exemple, au moins un capteur de position en lien avec le ou les bras 6 pivotant, au moins un capteur de présence de la botte B sur la surface de réception P1, au moins un capteur de présence sur l'une au moins des parois latérales C2, au moins un capteur de position au niveau du double peigne ou au niveau de l'actionneur permettant le changement d'état de l'élément de saisie 1a, 1b, 1c. Grâce aux différents capteurs, l'actionnement automatiquement du dispositif de préhension et d'extraction pourra se faire en toute sécurité.

Dans le cas où la machine selon la présente invention est prévue pour la fabrication de granulés, celle-ci peut être du type plateforme, fixe ou stationnaire, configurée/équipée, de manière connue, pour permettre de décompacter ou déstructurer une botte de paille pour en faire des pellets. Dans une telle machine, la plateforme est le caisson C et la surface de réception P1 est formée par une partie de la plateforme. Cette plateforme pourra disposer de parois latérales C2, généralement de quelques centimètres. Selon une variante, la plateforme est dépourvue de parois latérales C2.

La présente invention a également pour objet un procédé de préhension et d'extraction du moyen de liaison L d'une botte B cylindrique ou parallélépipédique chargée dans une machine destinée à charger, défaire, distribuer et/ou transformer une telle botte B. Une telle machine, qui comprend un caisson C et une surface de réception P1 sur laquelle peut reposer une telle botte B, peut être une machine, selon la présente invention, décrite précédemment et convenant à la mise en œuvre d'un tel procédé.

La machine peut être du type pailleuse ou du type pour la fabrication de granulés utilisés comme combustible.

Conformément à la présente invention, un tel procédé consiste, à partir d'une telle machine convenant à sa mise œuvre, suite à une étape de sectionnement du moyen de liaison L :
- à déplacer les moyens de préhension 1 depuis une première position éloignée de la surface externe S de la botte B jusqu'à une deuxième position au niveau de la surface externe S où s'étend le moyen de liaison L, puis à saisir le moyen de liaison L à l'aide desdits moyens de préhension 1,
- dans une étape d'extraction : à extraire, grâce aux moyens d'extraction, le moyen de liaison L de la botte B en l'écartant de la surface externe S de la botte B, le cas échéant, avant l'extraction complète, à libérer le moyen de liaison L dudit moyen de préhension 1.

L'avantage d'utiliser un tel procédé est la séparation mécanisée du moyen de liaison L de la botte B. Un tel procédé permet au moins de saisir mécaniquement/automatiquement le moyen de liaison L et d'extraire le moyen de liaison L de la botte B en le séparant mécaniquement/automatiquement au moins partiellement de cette dernière, de préférence complètement (ou totalement). La productivité est donc améliorée comme le confort d'utilisation pour l'opérateur.

On comprend que dans la deuxième position au niveau de la surface externe S, le moyen de préhension 1 peut s'étendre ou pénétrer dans l'épaisseur (ou l'épaisseur de la couche externe) de la botte B (figures 3 et 4).

Dans l'étape de préhension, dans la deuxième position, le procédé peut consister à réaliser un changement d'état du moyen de préhension 1 pour le faire passer d'un état d'attente ou ouvert à un état de préhension ou fermé réalisant la saisie du moyen de liaison L.

Dans l'étape de préhension, le procédé peut consister à saisir le moyen de liaison L par pincement, emprisonnement, serrage ou accrochage.

Dans l'étape d'extraction, le procédé peut consister soit à extraire ledit moyen de liaison L par rabattement de ce dernier sur ou au-delà d'un côté du caisson C ou de la machine, soit à réaliser une étape préalable de rabattement consistant à rabattre le moyen de liaison L sur ou au-delà d'un côté du caisson C ou de la machine puis à extraire (complètement) ledit moyen de liaison L.

Toujours dans l'étape d'extraction, le cas échéant suite à l'étape de rabattement préalable, le procédé peut consister à extraire le moyen de liaison L de la botte B par enroulement de ce dernier. De préférence, l'enroulement est réalisé autour d'un axe d'enroulement X2, de préférence horizontal et/ou parallèle au fond C1 du caisson C et/ou parallèle au sol et/ou transversal par rapport à la direction d'avance A et/ou transversal par rapport à l'axe longitudinal X de la machine.

Dans une étape de libération, que peut comprendre en outre le procédé, suite à l'étape d'extraction, ledit procédé peut consister à libérer automatiquement le moyen de liaison L desdits moyens d'extraction 3 et, le cas échéant, dudit moyen de préhension 1, ce en vue de pouvoir réaliser automatiquement son dégagement ou enlèvement.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention.

## Revendications

1. Procédé de préhension et d'extraction du moyen de liaison (L) d'une botte (B) cylindrique ou parallélépipédique chargée dans une machine destinée à charger, défaire, distribuer et/ou transformer une telle botte (B), ladite machine comprenant un caisson (C) et une surface de réception (P1) sur laquelle repose une telle botte (B) maintenue en forme par un moyen de liaison (L) s'étendant au niveau de la surface externe (S) de ladite botte (B), **caractérisé en ce qu'**il consiste, à partir d'une telle machine comprenant en outre un dispositif de préhension et d'extraction dudit moyen de liaison (L), ledit dispositif comprenant un moyen de préhension (1) et des moyens d'extraction, suite à une étape de sectionnement du moyen de liaison (L) :
- dans une étape de préhension : à déplacer le moyen de préhension (1) depuis une première position éloignée de la surface externe (S) de la botte (B) jusqu'à une deuxième position au niveau de la surface externe (S) où s'étend le moyen de liaison (L), puis à saisir le moyen de liaison (L) à l'aide dudit moyen de préhension (1),
- dans une étape d'extraction : à extraire, grâce aux moyens d'extraction, le moyen de liaison (L) de la botte (B) en l'écartant de la surface externe (S) de la botte (B).

2. Procédé de préhension et d'extraction, selon la revendication 1, **caractérisé en ce qu'**il consiste, dans l'étape de préhension, dans la deuxième position, à réaliser un changement d'état du moyen de préhension (1) pour le faire passer d'un état d'attente à un état de préhension réalisant la saisie du moyen de liaison (L).

3. Procédé de préhension et d'extraction, selon la revendication 1 ou 2, **caractérisé en ce qu'**il consiste, dans l'étape d'extraction, soit à extraire ledit moyen de liaison (L) par rabattement de ce dernier sur ou au-delà d'un côté du caisson (C) ou de la machine, soit à réaliser une étape préalable de rabattement consistant à rabattre le moyen de liaison (L) sur ou au-delà d'un côté du caisson (C) ou de la machine puis à extraire ledit moyen de liaison (L).

4. Procédé de préhension et d'extraction, selon l'une quelconque des revendications 1 à 3, **caractérisé en ce qu'**il consiste, dans l'étape d'extraction, le cas échéant suite à l'étape de rabattement préalable, à extraire le moyen de liaison (L) de la botte (B) par enroulement de ce dernier autour d'un axe d'enroulement (X2), de préférence un axe d'enroulement (X2) horizontal.

5. Machine destinée à charger, défaire, distribuer et/ou transformer une botte (B) cylindrique ou parallélépipédique maintenue en forme par un moyen de liaison (L) s'étendant au niveau de la surface externe (S) de ladite botte (B), ladite machine comprenant un caisson (C) et une surface de réception (P1), **caractérisée en ce qu'**elle comprend en outre un dispositif de préhension et d'extraction dudit moyen de liaison (L) comprenant :
- un moyen de préhension (1) configuré pour pouvoir saisir le moyen de liaison (L) d'une telle botte (B) reposant sur ladite surface de réception (P1),
- des moyens d'extraction configurés pour pouvoir agir sur le moyen de liaison (L) de sorte à pouvoir l'extraire de la botte (B) en l'écartant de sa surface externe (S),
et étant configuré pour pouvoir déplacer ledit moyen de préhension (1) au-dessus de ladite surface de réception (P1) entre une première position lui permettant d'être éloigné de la surface externe (S) de la botte (B) et une deuxième position lui permettant, pour saisir le moyen de liaison (L), d'être positionné au niveau de ladite surface externe (S).

6. Machine, selon la revendication 5, **caractérisée en ce que** le moyen de préhension (1) est configuré pour pouvoir changer d'état de sorte à passer, lors de son actionnement, d'un état d'attente ou ouvert à un état de préhension ou fermé et inversement, ledit état de préhension ou fermé permettant de saisir le moyen de liaison (L).

7. Machine, selon la revendication 5 ou 6, **caractérisée en ce que** le moyen de préhension (1) est configuré pour saisir le moyen de liaison (L) par pincement, emprisonnement, serrage ou accrochage.

8. Machine, selon l'une quelconque des revendications 5 à 7, **caractérisée en ce que** le moyen de préhension (1) comprend au moins un élément de saisie (1a, 1b, 1c) mobile apte, lors du passage de l'état d'attente à l'état de préhension du moyen de préhension (1), à être déplacé en translation, de préférence en translation rectiligne, ou suivant une autre trajectoire, par exemple hélicoïdale.

9. Machine, selon la revendication 8, **caractérisée en ce que** le moyen de préhension (1) comprend un double peigne comprenant deux peignes (1a, 1b) munis de dents (10a, 10b) aptes à pénétrer dans l'épaisseur de la botte (B), les deux peignes (1a, 1b) s'étendant parallèlement l'un derrière l'autre et au moins l'un desdits peignes (1a, 1b) forme le ou l'un des élément(s) de saisie mobile.

10. Machine, selon l'une quelconque des revendications 5 à 9, **caractérisée en ce que** le dispositif de préhension et d'extraction est monté de manière articulée sur le caisson (C) et comprend au moins une articulation (5) comportant au moins un axe de pivotement (5a), de préférence au moins un axe de pivotement (5a) horizontal, et au moins un bras (6), de préférence deux bras (6), pivotant autour du ou de l'un des axes de pivotement (5a) et supportant au moins le moyen de préhension (1) de sorte à permettre son déplacement dans la première position et dans la deuxième position.

11. Machine, selon l'une quelconque des revendications 5 à 10, **caractérisée en ce que** les moyens d'extraction comprennent des moyens de rabattement (2) aptes à être déplacés et étant configurés pour pouvoir venir, lors de leur déplacement, s'appliquer contre le moyen de liaison (L) de sorte à le rabattre sur ou au-delà d'un côté du caisson (C) ou de la machine.

12. Machine, selon la revendication 11, **caractérisée en ce que** les moyens d'extraction comprennent en outre un système d'entraînement (4) permettant d'assurer le déplacement des moyens de rabattement (2), ledit système d'entraînement (4) comprenant un chariot (4a) d'entraînement mobile en translation, de préférence en translation rectiligne, d'un côté à l'autre du caisson (C) ou de la machine et **en ce que** les moyens de rabattement (2) sont montés solidairement sur ledit chariot (4a) et, de préférence, comprennent des guides (2b) permettant de collecter, rassembler et guider le moyen de liaison (L) rencontrant lesdits moyens de rabattement (2) lors de leur déplacement.

13. Machine, selon l'une quelconque des revendications 11 et 12, **caractérisée en ce que** les moyens d'extraction comprennent en outre des moyens de retrait (3) permettant d'extraire le moyen de liaison (L) de la botte (B), de préférence par enroulement autour d'un axe d'enroulement (X2), de préférence un axe d'enroulement (X2) horizontal.
